# EUROPEAN PATENT APPLICATION

(11) **EP 4 645 420 A1**
(43) Date of publication of application: **05.11.2025**
(21) Application number: 23932487.4
(22) Date of filing: 14.04.2023
(51) Int. Cl.: H01M 4/13

(54) **NEGATIVE ELECTRODE SHEET, SECONDARY BATTERY COMPRISING SAME, AND ELECTRIC DEVICE**

(71) Applicant: Contemporary Amperex Technology Co., Limited, Ningde, Fujian 352100 (CN)
(72) Inventor: CHEN, Xingbu, Ningde, Fujian 352100 (CN); WU, Longsheng, Ningde, Fujian 352100 (CN); LI, Xuan, Ningde, Fujian 352100 (CN); WU, Lili, Ningde, Fujian 352100 (CN); DONG, Miaomiao, Ningde, Fujian 352100 (CN); SUN, Xin, Ningde, Fujian 352100 (CN)
(74) Representative: Ziebig Hengelhaupt Intellectual Property Attorneys Patentanwaltskanzlei PartGmbB
(86) International application number: PCT/CN2023/088263
(87) International publication number: WO 2024/212200

(57) **Abstract**

The present application relates to a negative electrode sheet, and a secondary battery and an electrical device including the same. The negative electrode sheet comprises a current collector and a negative electrode active layer stacked on surface of the current collector, and the negative electrode active layer comprises a first active layer and a second active layer which are stacked. The materials of the first active layer comprise, in percentage by mass based on the first active layer: 60%-94% of a silicon-based material, 0%-30% of a carbon-based material, and 5%-15% of a binder. The materials of the second active layer comprise, in percentage by mass based on the second active layer: 0%-5% of a second silicon-based material, 94%-99% of a second carbon-based material, and 1%-3% of a second binder. The negative electrode sheet has good cycle performance.

## Description

### TECHNICAL FIELD

The present application relates to the technical field of lithium batteries, and particularly relates to a negative electrode sheet and a secondary battery and an electrical device comprising same.

### BACKGROUND

**In** recent years, with the wide application range of lithium-ion batteries, the lithium-ion batteries are widely used in energy storage power systems such as hydropower, thermal power, wind power and solar power stations, as well as the fields such as power tools, electric bicycles, electric motorcycles, electric vehicles, military equipment, aerospace and the like.

Traditionally, negative electrode active materials of the lithium-ion batteries are mainly carbon-based materials. Later, silicon-based materials have been developed with the increasing requirements for energy density. Moreover, mixing the carbon-based materials and the silicon-based materials into the negative electrode active materials has become a development trend However, it is needed to further improve the cycle performance of batteries containing such negative electrode active materials.

### SUMMARY

The present application is implemented in view of the above problems, and aims to provide a negative electrode sheet and a secondary battery and an electrical device comprising same. The negative electrode sheet has good cycle performance.

In a first aspect, the present application provides a negative electrode sheet, which includes a current collector and a negative electrode active layer stacked on the surface of the current collector. The negative electrode active layer includes a first active layer and a second active layer which are stacked.

The materials of the first active layer include, in percentage by mass based on the first active layer:
60%-94% of a first silicon-based material, 0%-30% of a first carbon-based material, and 5%-15% of a first binder.

The materials of the second active layer include, in percentage by mass based on the second active layer:
0%-5% of a second silicon-based material, 94%-99% of a second carbon-based material, and 1%-3% of a second binder.

The negative electrode sheet is good in overall structural stability, and can effectively improve the cycle performance of the battery and prolong the cycle life of the battery. Moreover, the rate capability of the battery is also improved.

In a second aspect, the present application provides a secondary battery which includes the negative electrode sheet in the first aspect.

In a third aspect, the present application provides an electrical device, which includes the secondary battery in the second aspect.

### BRIEF DESCRIPTION OF THE DRAWINGS

FIG. 1 is a schematic diagram of a secondary battery according to an embodiment of the present application;
FIG. 2 is an exploded view of a secondary battery shown in FIG. 1 according to an embodiment of the present application;
FIG. 3 is a schematic diagram of a battery module according to an embodiment of the present application;
FIG. 4 is a schematic diagram of a battery pack according to an embodiment of the present application;
FIG. 5 is an exploded view of a battery pack shown in FIG. 4 according to an embodiment of the present application;
FIG. 6 is a schematic diagram of an electrical device using a secondary battery as a power supply according to an embodiment of the present application;

### Reference numerals:

1, battery pack; 2, upper box body; 3, lower box body; 4, battery module; 5, secondary battery; 51, case; 52, electrode assembly; 53, cover plate; and 6, electrical device;
FIG. 7 is a schematic structural diagram of a negative electrode sheet prepared in Example 1 of the present application;
FIG. 8 is a schematic structural diagram of a negative electrode sheet prepared in Example 12 of the present application; and
FIG. 9 is a schematic structural diagram of a negative electrode sheet prepared in Example 13 of the present application.

### DETAILED DESCRIPTION

Embodiments of a negative electrode sheet and a secondary battery and an electrical device including same in the present application are described in detail with appropriate reference to the accompanying drawings. However, unnecessary elaboration may be omitted. For example, there are cases where detailed descriptions of well-known matter and repetitive explanations of substantially identical structures are omitted. This is to prevent the unnecessary prolixity of the following description and to facilitate the understanding of those skilled in the art. In addition, the accompanying drawings and the following descriptions are provided for the full understanding of the present application by those skilled in the art and are not intended to limit the subject matter of the claims.

In the present application, the "range" is defined by a lower limit and an upper limit. A given range is defined by selecting a lower limit and an upper limit, which define the boundaries of a particular range. The range defined by such way may be either inclusive or exclusive of end values, and may be arbitrarily combined, i.e., any lower limit may be combined with any upper limit to form a range. For example, if ranges of 60-120 and 80-110 are listed for a particular parameter, it is to be understood that the ranges of 60-110 and 80-120 are also contemplated. In addition, if the minimum range values 1 and 2 are listed, and if the maximum range values 3, 4 and 5 are listed, the following ranges can be all contemplated: 1-3, 1-4, 1-5, 2-3, 2-4, and 2-5. In the present application, unless otherwise specified, the numerical range "a-b" represents an abbreviated representation of any combination of real numbers between a and b, in which, both a and b are real numbers. For example, the numerical range "0-5" indicates that all real numbers between "0-5" have been listed in this article, and "0-5" is just an abbreviated representation of these combinations. In addition, when expressing a parameter as an integer ≥2, it is equivalent to disclosing that the parameter is an integer 2, 3, 4, 5, 6, 7, 8, 9, 10, 11, 12, etc.

Unless otherwise specified, all embodiments of the present application and optional embodiments may be combined with each other to form a new technical solution.

Unless otherwise specified, all technical features of the present application and optional technical features may be combined with each other to form a new technical solution.

Unless otherwise specified, all steps in the present application may be carried out sequentially or randomly, preferably sequentially. For example, the method includes steps (a) and (b), indicating that the method may include steps (a) and (b) in sequence, and may also include steps (b) and (a) in sequence. For example, the method may include a step (c), indicating that step (c) may be added to the method in any sequence, for example, the method may include steps (a), (b) and (c), may also include steps (a), (c) and (b), and may also include steps (c), (a) and (b) and so on.

Unless otherwise specified, the "including" and "comprising" in the present application shall be construed as open-ended but may alternatively be closed-ended. For example, the "including" and "comprising" may indicate that other components not listed may also be included or comprised, or only those listed may be included or comprised.

Unless otherwise specified, the term "or" in the present application is inclusive. For example, the phrase "A or B" means "A, B, or both A and B". More specifically, "A or B" is met by either of the following: A is true (or present) and B is false (or absent); A is false (or absent) and B is true (or present); or both A and B are true (or present).

In some examples of the present application, provided is a negative electrode sheet, which includes a current collector and a negative electrode active layer stacked on the surface of the current collector. The negative electrode active layer includes a first active layer and a second active layer which are stacked.

The materials of the first active layer include, in percentage by mass based on the first active layer:
60%-94% of a first silicon-based material, 0%-30% of a first carbon-based material, and 5%-15% of a first binder.

The materials of the second active layer include, in percentage by mass based on the second active layer:
0%-5% of a second silicon-based material, 94%-99% of a second carbon-based material, and 1%-3% of a second binder.

At present, batteries with carbon-based materials and silicon-based materials mixed as negative electrode active materials are insufficient in cycle performance. In view of this problem, the inventor found that due to high expansion and rebound characteristics of the silicon-based materials, it is needed to add more binders to maintain the structural stability of electrode sheets. Moreover, in the negative electrode active layer with mixed silicon-based materials and carbon-based materials, the surfaces of carbon-based materials will also be wrapped with more binders. However, the stability of the carbon-based materials is high. Therefore, the actual benefits of these binders are low. Moreover, the problem that the resulted unstable structures of the silicon-based materials lead to poor overall cycle performance of the batteries is always ignored.

Based on these findings, the negative electrode sheet provided by the present application is provided with the first active layer dominated by the silicon-based material and the second active layer dominated by the carbon-based material. According to the structures of the silicon-based material and the carbon-based material and the requirements on the binders, different binders within a certain range are added to the first active layer and the second active layer, so that the overall structural stability of the negative electrode sheet can be improved under the condition that the total dosage of the binders is equal to or even less than that of the binders in a traditional method, the cycle performance of the battery is further improved, and the cycle life of the battery is prolonged. Moreover, the rate capability of the battery is also improved under the condition that the position relationships between the first active layer and the current collector and between the second active layer and the current collector are the same.

Specifically, the mass percentage of the first silicon-based material includes but is not limited to: 60%, 63%, 65%, 67%, 70%, 73%, 75%, 77%, 80%, 83%, 85%, 87%, 90%, 92%, 94% or a range formed by any two of previous values.

Specifically, the mass percentage of the first carbon-based material includes but is not limited to: 0%, 3%, 5%, 10%, 15%, 18%, 20%, 25%, 30% or a range formed by any two of previous values.

Specifically, the mass percentage of the first binder includes but is not limited to: 5%, 6%, 7%, 8%, 9%, 10%, 11%, 12%, 13%, 14%, 15% or a range formed by any two of previous values.

Specifically, the mass percentage of the second silicon-based material includes but is not limited to: 0%, 1%, 2%, 3%, 4%, 5% or a range formed by any two of previous values.

Specifically, the mass percentage of the second carbon-based material includes but is not limited to: 94%, 95%, 96%, 97%, 97.5%, 98%, 99% or a range formed by any two of previous values.

Specifically, the mass percentage of the second binder includes but is not limited to: 1%, 1.5%, 2%, 2.5%, 3% or a range formed by any two of previous values.

In some examples, compared with the second active layer, the first active layer is far away from the current collector.

Compared with the carbon-based material, the silicon-based material is relatively large in volume expansion after lithium intercalation. Consequently, the porosity of the first active layer is generally greater than that of the second active layer, and a resulted gradient pore structure is beneficial to the improvement of dynamics in the cycle process, further improving the rate capability of the battery. In addition, it is to be understood that in these examples, the silicon-based material is preferentially intercalated with lithium, which is beneficial to the improvement of quick charging performance of the battery.

In some examples, the first active layer is closer to the current collector than the second active layer. The first active layer is relatively high in binder content, so the first active layer keeps good binding strength with the current collector, which improves the stability of the electrode sheet structure. Moreover, in the cycle process of the battery, the discharge depth of the battery in an actual working condition is small, the carbon-based material is preferentially subjected to lithium de-intercalation during discharge, so that the utilization rate of the carbon-based material is relatively high and the utilization rate of the silicon-based material is relatively low. In this way, the cycle life of the battery can be prolonged.

In some examples, a base coating layer is also arranged between the first active layer and the current collector. Further, the materials of the base coating layer include a binder and a conductive agent. When the first active layer is close to the current collector, the binding strength and the electric contact with the current collector can be improved by the base coating layer, thereby further improving the cycle performance.

In addition, similar to the binder, due to the high expansion and rebound characteristics of the silicon-based material, it is usually needed to add more conductive agents to maintain a conductive network of the electrode sheet. In the negative electrode active layer containing both the silicon-based material and the carbon-based material, the surface of the carbon-based material will be wrapped with more conductive agents. However, the conductivity of the carbon-based material is good, so the actual benefit of the conductive agent is low. Consequently, the conductive network between the silicon-based materials is not perfect enough. As a result, the conductivity is poor. Therefore, in some examples of the present application, a certain range of conductive agents are added to the first active layer and the second active layer. The conductivity of the negative electrode active layer can be further improved. Particularly, the conductive agent accounts for a relatively high proportion in the first active layer. When the first active layer is closer to the current collector, good electric contact can be achieved between the first active layer and the current collector.

In some examples, the materials of the first active layer further include 1%-5% of a first conductive agent. Specifically, the percentage mass of the first conductive agent includes but is not limited to: 1%, 2%, 3%, 4%, 5% or a range formed by any two of previous values.

In some examples, the materials of the second active layer further include 0.5%-2% of a second conductive agent. Specifically, the percentage mass of the first conductive agent includes but is not limited to: 0.5%, 0.6%, 0.8%, 1%, 1.5%, 2% or a range formed by any two of previous values.

Without limitation, the first conductive agent and the second conductive agent may be traditional conductive agents in the field, such as one or more of conductive carbon. Specifically, one or more of superconducting carbon, acetylene black, carbon black, Ketjen black, carbon dots, carbon nanotubes, graphene and carbon nanofibers may be included.

In some examples, in the first active layer, the Dv50 of the first silicon-based material is ≤15 µm. Specifically, the Dv50 of the first silicon-based material includes but is not limited to: 1 µm, 2 µm, 3 µm, 4 µm, 5 µm, 6 µm, 7 µm, 8 µm, 9 µm, 10 µm, 11 µm, 12 µm, 13 µm, 14 µm, 15 µm or a range formed by any two of the previous values. Further, the Dv50 of the first silicon-based material is 5 µm to 10 µm.

In some examples, in the first active layer, the Dv50 of the first carbon-based material is ≤10 µm. Specifically, the Dv50 of the first carbon-based material includes but is not limited to: 1 µm, 2 µm, 3 µm, 4 µm, 5 µm, 6 µm, 7 µm, 8 µm, 9 µm, 10 µm or a range formed by any two of the previous values. Further, the Dv50 of the first carbon-based material is 2 µm to 6 µm.

Further, the Dv99 of the first carbon-based material is <15 µm. Specifically, the Dv99 of the first carbon-based material includes but is not limited to: 1 µm, 2 µm, 3 µm, 4 µm, 5 µm, 6 µm, 7 µm, 8 µm, 9 µm, 10 µm, 11 µm, 12 µm, 13 µm, 14 µm, 15 µm or a range formed by any two of the previous values.

The particle sizes of the silicon-based material and the carbon-based material in the first active layer are reasonably controlled, and thus the particle size gradation can further improve the cycle performance and the rate capability of the battery, while improving the compaction capability of the negative electrode active layer, so that the consumption of the binders, the conductive agents and the like is further reduced. In some examples, the compaction density of the negative electrode active layer is 1.2-2.0 g/cm³.

Without limitation, in the second active layer, the Dv50 of the second silicon-based material is ≤15 µm. Specifically, the Dv50 of the second silicon-based material includes but is not limited to: 1 µm, 3 µm, 5 µm, 7 µm, 10 µm, 12 µm, 15 µm or a range formed by any two of the previous values. In some examples, the Dv50 of the second silicon-based material is 5 µm to 10 µm.

Without limitation, in the second active layer, the Dv50 of the second carbon-based material is ≤25 µm. Specifically, the Dv50 of the second carbon-based material includes but is not limited to: 1 µm, 3 µm, 5 µm, 7 µm, 10 µm, 12 µm, 15 µm, 20 µm, 25 µm or a range formed by any two of the previous values. In some examples, the Dv50 of the second carbon-based material is 5 µm to 20 µm. Further, the Dv99 of the second carbon-based material is ≤40 µm. Specifically, the Dv99 of the second carbon-based material includes but is not limited to: 1 µm, 5 µm, 10 µm, 15 µm, 17 µm, 20 µm, 25 µm, 30 µm, 35 µm, 40 µm or a range formed by any two of the previous values.

Without limitation, the materials of the first active layer may also include other auxiliaries such as a thickener. In some examples, the thickener includes sodium carboxymethylcellulose. Without limitation, the weight ratio of the thickener is 0-15 wt% based on the total weight of the first active layer.

Without limitation, the materials of the second active layer may also include other auxiliaries such as the thickener. In some examples, the thickener includes sodium carboxymethylcellulose. Without limitation, the weight ratio of the thickener is 0-15 wt% based on the total weight of the second active layer.

Without limitation, the first binder may be a traditional binder in the field, such as one or more of styrene butadiene rubber (SBR), polyacrylic acid (PAA), sodium polyacrylate (PAAS), polyacrylamide (PAM), polyvinyl alcohol (PVA), sodium alginate (SA), polymethylacrylic acid (PMAA) and carboxymethyl chitosan (CMCS). Further, the first binder includes one or more of the SBR, the PAA, the PAAS and the PAM.

Without limitation, the second binder can be a traditional binder in the field, such as one or more of styrene butadiene rubber (SBR), polyacrylic acid (PAA), sodium polyacrylate (PAAS), polyacrylamide (PAM), polyvinyl alcohol (PVA), sodium alginate (SA), polymethylacrylic acid (PMAA) and carboxymethyl chitosan (CMCS). Further, the second binder includes one or more of the SBR, the PAA, the PAAS and the PAM. By selecting appropriate binder types, the cycle performance and the rate capability of the battery can be further improved.

Without limitation, the first silicon-based material may be a traditional silicon-based material in the field, such as one or more of a pure silicon material, a silicon oxide material and a silicon-carbon material. Further, the first silicon-based material includes one or more of the silicon-carbon material and the silicon oxide material.

Without limitation, the second silicon-based material may be a traditional silicon-based material in the field, such as one or more of the pure silicon material, the silicon oxide material and the silicon-carbon material. Further, the second silicon-based material includes one or more of the silicon-carbon material and the silicon oxide material.

Without limitation, the first carbon-based material may be a traditional carbon-based material in the field, such as one or more of graphite, graphene, hard carbon, soft carbon, porous carbon and activated carbon. Further, the second carbon-based material includes one or more of the graphite and hard carbon.

Without limitation, the second carbon-based material may be a traditional carbon-based material in the field, such as one or more of graphite, graphene, hard carbon, soft carbon, porous carbon and activated carbon. Further, the second carbon-based material includes one or more of the graphite and hard carbon.

By selecting appropriate silicon-based and carbon-based materials, the cycle performance and the rate performance of the battery can be further improved.

In some examples of the present application, further provided is a secondary battery, which includes the abovementioned negative electrode sheet.

In some examples of the present application, further provided is an electrical device, which includes the abovementioned secondary battery.

A secondary battery, a battery module, a battery pack and an electrical device in the present application are described below with appropriate reference to the accompanying drawings.

In one example of the present application, provided is a secondary battery.

Generally, the secondary battery includes a positive electrode sheet, a negative electrode sheet, an electrolyte and a separator. In the charging and discharging processes of the battery, active ions shuttle between the positive electrode sheet and the negative electrode sheet, subjecting to intercalation and de-intercalation. The electrolyte plays a role in conducting ions between the positive electrode sheet and the negative electrode sheet. The separator is arranged between the positive electrode sheet and the negative electrode sheet, mainly plays a role in preventing short circuits between the positive electrode and the negative electrode, while allowing the ions to pass through.

### Positive electrode sheet

The positive electrode sheet includes a positive electrode current collector and a positive electrode membrane layer arranged on at least one surface of the positive electrode current collector. The positive electrode membrane layer includes the positive electrode active material in the first aspect of the present application.

As an example, the positive electrode current collector has two opposite surfaces in its own thickness direction. The positive electrode membrane layer is arranged on either one or both of the two opposite surfaces of the positive electrode current collector.

In some embodiments, the positive electrode current collector may be a metal foil or a composite current collector. For example, if it is the metal foil, an aluminum foil may be adopted. The composite current collector may include a polymer material base layer and a metal layer formed on at least one surface of the polymer material base layer. The composite current collector may be formed by forming a metal material on the polymer material substrate. The metal material includes but is not limited to aluminum, aluminum alloy, nickel, nickel alloy, titanium, titanium alloy, silver, silver alloy and the like. The polymer material substrate includes substrates such as polypropylene (PP), polyethylene terephthalate (PET), polybutylene terephthalate (PBT), polystyrene (PS), and polyethylene (PE).

In some embodiments, the positive electrode active material may be a positive electrode active material which is known in the field for the battery. As an example, the positive electrode active material may include at least one of lithium-containing phosphate of an olivine structure, lithium transition metal oxides and modified compounds thereof. However, the present application is not limited to these materials, and may alternatively employ other traditional materials which can be used as the positive electrode active material of the battery. These positive electrode active materials may be used alone. Or, two or more of them may be combined to use. The examples of the lithium transition metal oxides may include, but are not limited to at least one of lithium cobalt oxides (e.g., LiCoO₂), lithium nickel oxides (e.g., LiNiO₂), lithium-manganese oxides (e.g., LiMnO₂, LiMn₂O₄), lithium nickel cobalt oxides, lithium manganese cobalt oxides, lithium nickel manganese oxides, lithium nickel cobalt manganese oxide (e.g., LiNi_{1/3}Co_{1/3}Mn_{1/3}O₂ (may also abbreviated as NCM₃₃₃)), LiNi_{0.5}Co_{0.2}Mn_{0.3}O₂ (may also abbreviated as NCM₅₂₃), LiNi_{0.5}Co_{0.25}Mn_{0.25}O₂ (may also abbreviated as NCM₂₁₁), LiNi_{0.6}Co_{0.2}Mn_{0.2}O₂ (may also be abbreviated as NCM₆₂₂), LiNi_{0.8}Co_{0.1}Mn_{0.1}O₂ (may also be abbreviated as NCM₈₁₁), lithium nickel cobalt aluminum oxides (e.g., LiNi_{0.85}Co_{0.15}Al_{0.05}O₂) and modified compounds thereof. The example of the lithium-containing phosphate of the olivine structure may include but is not limited to at least one of lithium iron phosphate (such as LiFePO₄ (LFP for short)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. The positive electrode active material is present in the positive electrode membrane layer at a weight ratio of 80-100 wt%, based on the total weight of the positive electrode membrane layer.

In some embodiments, the positive electrode membrane layer may also optionally include a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and fluorinated acrylate resin. The binder is present in the positive electrode membrane layer at a weight ratio of 0-20 wt%, based on the total weight of the positive electrode membrane layer.

**In** some embodiments, the positive electrode material layer may also optionally include a conductive agent. As an example, the conductive agent may include at least one of superconducting carbon, acetylene black, carbon black, Ketjen black, carbon dots, carbon nanotubes, graphene and carbon nanofibers. The conductive agent is present in the positive electrode membrane layer at a weight ratio of 0-20 wt%, based on the total weight of the positive electrode membrane layer.

**In** some embodiments, the positive electrode sheet may be prepared by following steps: dispersing the components for preparing the positive electrode sheet, such as the positive electrode active material, the conductive agent, the binder and any other component, into a solvent (such as N-methyl pyrrolidone) to obtain positive electrode slurry, in which the solid content of the positive electrode slurry is 40-80 wt%, and the viscosity at room temperature is adjusted to be 5,000 to 25,000 mPa•s; and coating the positive electrode slurry on the surface of the positive electrode current collector, drying, and then performing cold pressing by a cold rolling mill to form the positive electrode sheet. The unit coating areal density of positive electrode powder is 15-35 mg/cm², with a compaction density of the positive electrode sheet is 3.0-3.6 g/cm³, and optionally 3.3-3.5 g/cm³. The calculation formula for the compaction density is:
Compaction density = coating areal density / (thickness of extruded electrode sheet - thickness of current collector).

### Negative electrode sheet

The negative electrode sheet is shown as above and includes the current collector and the negative electrode active layer stacked on the surface of the current collector.

As an example, the negative electrode current collector has two opposite surfaces in its own thickness direction, and the negative electrode active layer is arranged on either one or both of the two opposite surfaces of the negative electrode current collector.

In some embodiments, the negative electrode current collector may be a metal foil or a composite current collector. For example, if it is the metal foil, a copper foil may be adopted. The composite current collector may include a polymer material base layer and a metal layer formed on at least one surface of the polymer material substrate. The composite current collector may be formed by forming a metal material on the polymer material substrate. The metal material includes but is not limited to copper, copper alloy, nickel, nickel alloy, titanium, titanium alloy, silver, silver alloy and the like. The polymer material substrate includes but is not limited to substrates such as polypropylene (PP), polyethylene terephthalate (PET), polybutylene terephthalate (PBT), polystyrene (PS), and polyethylene (PE).

In some embodiments, the negative electrode sheet may be prepared by following steps: dispersing the materials of the first active layer and the materials of the second active layer into a solvent (such as deionized water) respectively to form first active layer slurry and second active layer slurry, in which the solid content of the slurry is 30-70 wt%, and the viscosity at room temperature is adjusted to be 2,000 to 10,000 mPa•s; and coating the obtained first active layer slurry and second active layer slurry on the negative electrode current collector in sequence, and performing a drying process and cold pressing such as roll pressing to obtain the negative electrode sheet. The unit coating areal area density of negative electrode powder is 3-17 mg/cm², and the compaction density of the negative electrode sheet is 1.2-2.0 g/cm³.

### Electrolyte

The electrolyte plays a role in conducting ions between the positive electrode sheet and the negative electrode sheet. In the present application, there is no specific limitation to the type of the electrolyte, and the electrolyte can be selected as required. For example, the electrolyte may be in a liquid state, a gel state or an all-solid state.

In some embodiments, the electrolyte is an electrolyte solution. The electrolyte solution includes an electrolyte salt and a solvent.

In some embodiments, the electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP) and lithium tetrafluoro(oxalato)phosphate (LiTFOP). The concentration of the electrolyte salt is generally 0.5-5 mol/L.

In some examples, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte solution may also optionally include additives. For example, the additives may include a negative electrode film-forming additive and a positive electrode film-forming additive, and may also include additives that can improve certain properties of the battery, such as additives that can improve the overcharge performance of the battery, and additives that can improve the high-temperature or low-temperature performance of the battery.

### Separator

In some embodiments, the secondary battery also includes a separator. The type of the separator is not specially limited in the present application. Any well-known porous separator with high chemical stability and mechanical stability may be used.

In some embodiments, the material of the separator may be selected from at least one of glass fiber, non-woven fabric, polyethylene, polypropylene and polyvinylidene fluoride. The separator may be a single-layer film or a multi-layer composite film, which is not specially limited. When the separator is the multi-layer composite film, the materials of all layers may be the same or different, which are not specially limited.

In some embodiments, the thickness of the separator is 6-40 µm, and optionally, 12-20 µm.

In some embodiments, the positive electrode sheet, the negative electrode sheet and the separator may be made into an electrode assembly by a winding process or a lamination process.

In some embodiments, the secondary battery may include an outer package. The outer package can be used for packaging the electrode assembly and the electrolyte.

In some embodiments, the outer package of the secondary battery may be a hard shell, such as a hard plastic shell, an aluminum shell, and a steel shell. The outer package of the secondary battery may also be a soft package, such as a bag type soft package. The material of the soft package may be plastic, such as polypropylene, polybutylene terephthalate, and polybutylene succinate.

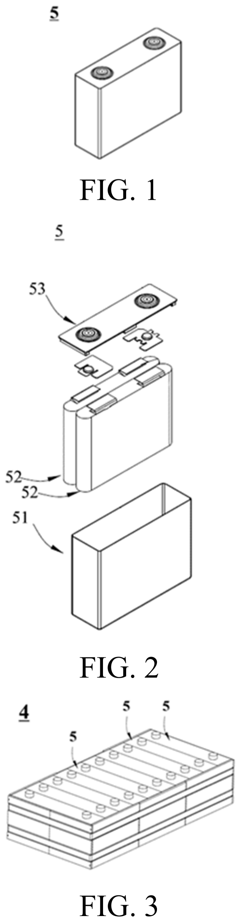

There is no special limitation to the shape of the secondary battery in the present application, it may be cylindrical, square or in any other shape. For example, in FIG. 1, a secondary battery 5 of a square structure is taken as an example.

In some embodiments, with reference to FIG. 2, the outer package may include a case 51 and a cover plate 53. The case 51 may include a bottom plate and a side plate connected to the bottom plate. The bottom plate and the side plate enclose to form an accommodating cavity. The case 51 is provided with an opening in communication with the accommodating cavity. The cover plate 53 can cover the opening to close the accommodating cavity. The positive electrode sheet, the negative electrode sheet and the separator may be processed to form an electrode assembly 52 by a winding process or a lamination process. The electrode assembly 52 is packaged in the accommodating cavity. An electrolyte infiltrates the electrode assembly 52. One or more electrode assemblies 52 may be contained in the secondary battery 5. The number may be selected by those skilled in the art according to specific actual requirements.

In some embodiments, the secondary battery may be assembled into a battery module. One or more secondary batteries may be contained in the battery module. The specific number may be selected by those skilled in the art according to the application and the capacity of the battery module.

FIG. 3 shows a battery module 4 as an example. With reference to FIG. 3, in the battery module 4, a plurality of secondary batteries 5 may be sequentially arranged in the length direction of the battery module 4. Of course, the secondary batteries may also be arranged according to any other mode. Further, the plurality of secondary batteries 5 may be further fixed by fasteners.

Optionally, the battery module 4 may also include a casing with an accommodating space. The plurality of secondary batteries 5 are accommodated in the accommodating space.

In some examples, the battery modules may also be assembled into a battery pack. One or more battery modules may be contained in the battery pack. The specific number may be selected by those skilled in the art according to the application and the capacity of the battery pack.

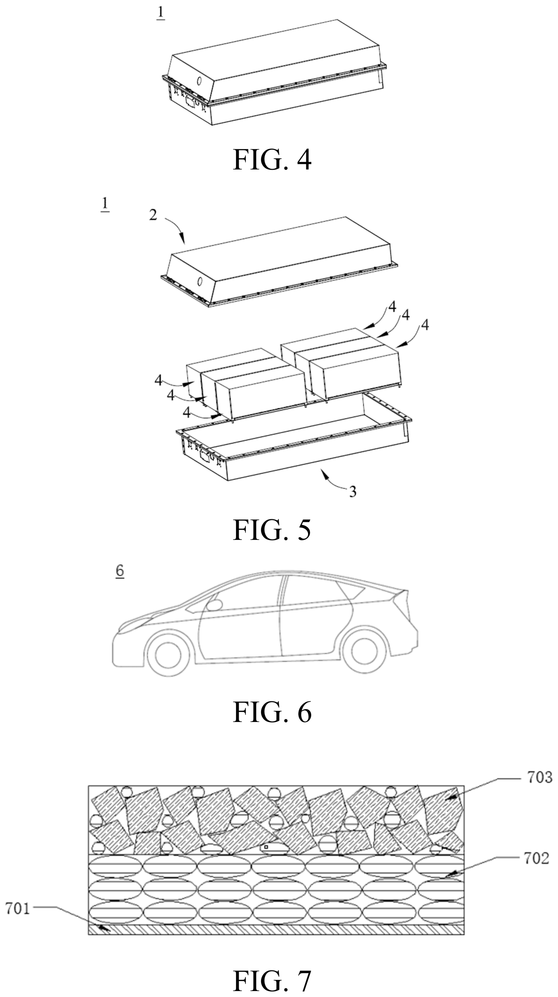

FIG. 4 and FIG. 5 show a battery pack 1 as an example. With reference to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 and form a closed space for accommodating the battery modules 4. The plurality of battery modules 4 can be arranged in the battery box in any mode.

In addition, the present application further provides an electrical device. The electrical device includes at least one of the secondary battery, the battery module, or the battery pack provided by the present application. The secondary battery, the battery module or the battery pack may be used as a power supply for the electrical device and may also be used as an energy storage unit for the electrical device. The electrical device may include a mobile device (such as a mobile phone and a notebook computer), an electric vehicle (such as a pure electric vehicle, a hybrid electric vehicle, a plug-in hybrid electric vehicle, an electric bicycle, an electric scooter, an electric golf cart, and an electric truck), an electric train, a ship, a satellite, an energy storage system and the like, but not limited thereto.

For the electrical device, the secondary battery, the battery module or the battery pack can be selected according to the use requirements.

FIG. 6 shows an electrical device as an example. The electrical device is the pure electric vehicle, the hybrid electric vehicle, the plug-in hybrid electric vehicle or the like. In order to meet the requirements of the electrical device on high power and high rate performance of the secondary battery, the battery pack or the battery module may be adopted.

As another example, the device may be the mobile phone, a tablet personal computer, the notebook computer and the like. The device is generally required to be light and thin, and may use the secondary battery as the power supply.

### Examples

In order to make the solved technical problems, technical solutions and beneficial effects in the present application clearer, the present application will be further described in detail below in conjunction with the examples and accompanying drawings. Obviously, the described examples are only some examples of the present application, not all examples. The following description of at least one exemplary example is in fact illustrative only and in no way serves as any limitation on the present application and its application. Based on the examples in the present application, all other examples obtained by those with ordinary knowledge in the art without creative labor fall within the scope of protection of the present application.

If the specific technology or conditions are not indicated in the examples, the technology or conditions described in the literature in the art or in accordance with the product specification shall be followed. If the manufacturer of the reagent or instrument is not indicated, it is a conventional product that is available commercially.

### Example 1

### 1) Preparation of positive electrode sheet

A positive electrode active material NCM811, conductive carbon black SP and a binder PVDF were dispersed into a solvent NMP according to a weight ratio of 98:1:1 and mixed uniformly to obtain positive electrode slurry. The positive electrode slurry was coated on a positive electrode current collector aluminum foil, and then subjected to drying and cold pressing to obtain the positive electrode sheet, in which the coating amount per unit area was 0.3 g/1540.25 mm².

### 2) Preparation of negative electrode sheet

Coating of a carbon-based material active layer: a negative electrode active material artificial graphite (Dv50=4 µm, Dv99=13 µm), a conductive agent acetylene black, a binder styrene butadiene rubber (SBR), and a thickener sodium carboxymethylcellulose (CMC-Na) were uniformly mixed in deionized water according to a weight ratio of 97%:0.8%:1.5%:0.7%, then coated on a copper foil and dried to obtain the carbon-based material active layer, in which the coating amount was 0.055 g/cm²; and
coating of a silicon-based material active layer: a negative electrode active material artificial graphite (Dv50=4 µm, Dv99=13 µm), a silicon oxide material (Dv50=8 µm), a conductive agent acetylene black, a binder styrene butadiene rubber (SBR), and a thickener sodium carboxymethylcellulose (CMC-Na) were uniformly mixed in deionized water according to a weight ratio of 18%:70%:3%:7%:2%, then coated on an electrode sheet with the carbon-based material active layer and dried to obtain the silicon-based material active layer, in which the coating amount was 0.055 g/cm². The double-layer coated electrode sheet was subjected to cold pressing, with a compaction density of 1.6 g/cm³.

The structure of the prepared negative electrode sheet is shown in FIG. 7, including a copper foil 701 and a carbon-based material active layer 702 and a silicon-based material active layer 703 which are sequentially stacked on the surface of the copper foil 701.

### 3) Separator

A polypropylene separator with a thickness of 12 µm was adopted.

### 4) Preparation of electrolyte solution

An organic solvent was a mixed solution containing ethylene carbonate (EC), ethyl methyl carbonate (EMC) and diethyl carbonate (DEC), in which the volume ratio of EC to EMC to DEC was 20:20:60. In an argon atmosphere glove box with a water content < 10 ppm, fully dried lithium salt LiPF6 was dissolved in the organic solvent and mixed uniformly to obtain the electrolyte solution. The concentration of the lithium salt was 1 mol/L.

### 5) Preparation of battery

The positive electrode sheet, the separator and the negative electrode sheet were stacked in sequence, in which the separator was between the positive electrode sheet and the negative electrode sheet to achieve an isolation effect. Then the positive electrode sheet, the separator and the negative electrode sheet were wound into a square nude cell, fed into an aluminum plastic film and roasted at 80°C to remove water. Then, 10 g of corresponding nonaqueous electrolyte solution was injected, and sealing, standing, and processes such as hot and cold pressing, formation, clamping, capacity grading were carried out to obtain a finished battery with a capacity of 4000 mAh.

In Examples 2-8, the preparation methods were the same as that in Example 1. The main difference was the change of mass percentage of all components, specifically shown in the following Table 1 (a silicon oxide material added to the carbon-based material active layer in Example 8 was the same as the silicon oxide material in a silicon-based material active layer).

In Examples 9-11, the preparation methods were the same as the preparation method in Example 1. The main difference was the change of particle sizes of the silicon-based material and the carbon-based material, specifically shown in the following Table 2.

**Table 1**

| | | Example 1 | Example 2 | Example 3 | Example 4 | Example 5 | Example 6 | Example 7 | Example 8 |
|---|---|---|---|---|---|---|---|---|---|
| Silicon-based material active layer | Silicon oxide material | 70% | 60% | 65% | 80% | 90% | 70% | 70% | 70% |
| | Artificial graphite | 18% | 20% | 18% | 5% | 0% | 18% | 18% | 18% |
| | Styrene butadiene rubber | 7% | 15% | 12% | 10% | 5% | 7% | 7% | 7% |
| | Acetylene black | 3% | 3% | 3% | 3% | 3% | 3% | 3% | 3% |
| | Sodium carboxymethylcellulose | 2% | 2% | 2% | 2% | 2% | 2% | 2% | 2% |
| Carbon-based material active layer | Silicon oxide material | 0% | 0% | 0% | 0% | 0% | 0% | 0% | **3%** |
| | Artificial graphite | 97% | 97% | 97% | 97% | 97% | **97.5%** | **98%** | **94%** |
| | Styrene butadiene rubber | 1.50% | 1.5% | 1.5% | 1.5% | 1.5% | **1.0%** | **2.0%** | 1.50% |
| | Acetylene black | 0.80% | 0.80% | 0.80% | 0.80% | 0.80% | 0.80% | **0%** | 0.80% |
| | Sodium carboxymethylcellulose | 0.70% | 0.70% | 0.70% | 0.70% | 0.70% | 0.70% | **0%** | 0.70% |

**Table 2**

| | | Example 9 | Example 10 | Example 11 |
|---|---|---|---|---|
| Silicon-based material active layer | Silicon oxide material | 70% | 70% | 70% |
| | Dv50 of silicon oxide material | **5 µm** | **10 µm** | **15 µm** |
| | Artificial graphite | 18% | 18% | 18% |
| | Dv50(Dv99) of artificial graphite | **6 µm (15 µm)** | **2 µm (12 µm)** | **10 µm (15 µm)** |
| | Styrene butadiene rubber | 7% | 7% | 7% |
| | Acetylene black | 3% | 3% | 3% |
| | Sodium carboxymethylcellulose | 2% | 2% | 2% |
| Carbon-based material active layer | Artificial graphite | 97% | 97% | 97% |
| | Dv50(Dv99) of artificial graphite | 12 µm (17 µm) | 12 µm (17 µm) | 12 µm (17 µm) |
| | Styrene butadiene rubber | 1.5% | 1.5% | 1.5% |
| | Acetylene black | 0.80% | 0.80% | 0.80% |
| | Sodium carboxymethylcellulose | 0.70% | 0.70% | 0.70% |

In Example 12, the preparation method was the same as the preparation method in Example 1, and the main difference was the exchange of materials of an upper layer and a lower layer, and a base coating layer was added. Specifically, in step 2), the negative electrode sheet was prepared by:
perform gravure coating on the base coating layer: uniformly mixing superconducting carbon, the binder styrene butadiene rubber (SBR), and the thickener sodium carboxymethylcellulose (CMC-Na) in deionized water according to the weight ratio of 70%:27%:3%, then coating the mixture on a copper foil in a gravure coating manner, and drying to obtain the base coating layer, in which, the coating amount was 0.0004 g/cm².

Coating of a silicon-based material active layer: uniformly mixing a negative electrode active material artificial graphite (Dv50=4 µm, Dv99=13 µm), a silicon oxide material (Dv50=8 µm), a conductive agent acetylene black, a binder styrene butadiene rubber (SBR), and a thickener sodium carboxymethylcellulose (CMC-Na) in deionized water according to a weight ratio of 18%:70%:3%:7%:2%, then coating the mixture on an electrode sheet with the base coating layer, and drying to obtain the silicon-based material active layer, in which, the coating amount was 0.055 g/cm².

Coating of a carbon-based material active layer: uniformly mixing a negative electrode active material artificial graphite (Dv50=4 µm, Dv99=13 µm), a conductive agent acetylene black, a binder styrene butadiene rubber (SBR), and a thickener sodium carboxymethylcellulose (CMC-Na) in deionized water according to a weight ratio of 97%:0.8%:1.5%:0.7%, then coating the mixture on the silicon-based material active layer, and drying to obtain the carbon-based material active layer, in which the coating amount was 0.055 g/cm². The double-layer coated electrode sheet was subjected to cold pressing, with a compaction density of 1.6 g/cm³.

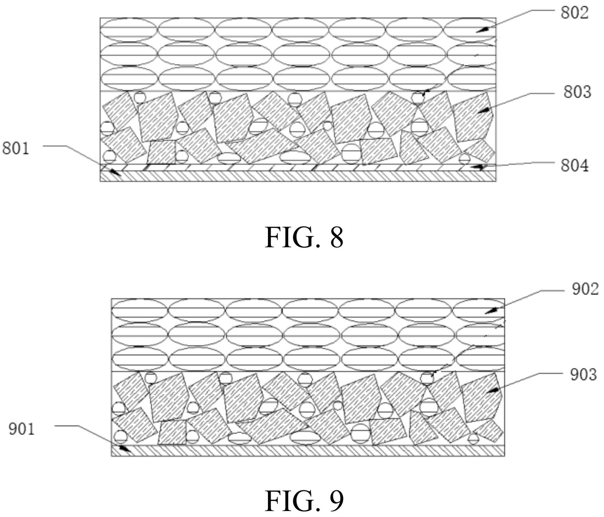

The structure of the prepared negative electrode sheet is shown in FIG. 8. The negative electrode sheet includes a copper foil 801 and a base coating layer 804, a silicon-based material active layer 803 and a carbon-based material active layer 802 which are sequentially stacked on the surface of the copper foil 801.

In Example 13, the preparation method was the same as the preparation in Example 12, and the main difference was that the base coating layer was not arranged. The structure of the prepared negative electrode sheet is shown in FIG. 9. The negative electrode sheet includes a copper foil 901 and a silicon-based material active layer 903 and a carbon-based material active layer 902 which are sequentially stacked on the surface of the copper foil 901.

In Example 14, the preparation method was the same as the preparation method in Example 1, and the main difference was that a pure silicon material was adopted to equivalently replace the silicon oxide material, and graphene was adopted to equivalently replace graphite.

In Example 15, the preparation method was the same as the preparation method in Example 1, and the main difference was that a silicon-carbon material was adopted to equivalently replace the silicon oxide material, and hard carbon was adopted to equivalently replace graphite.

In Examples 16-18, the preparation methods were the same as the preparation method in Example 1, and the main difference was that polyacrylic acid, polyacrylamide and polyvinyl alcohol were adopted to equivalently replace styrene butadiene rubber.

In Comparative Examples 1-3, the preparation methods were the same as the preparation method in Example 1, and the main difference was the change of proportions of all the components, specifically shown in the following Table 3.

**Table 3**

| | | Example 1 | Comparative Example 1 | Comparative Example 2 | Comparative Example 3 |
|---|---|---|---|---|---|
| Silicon-based material active layer | Silicon oxide material | 70% | 35% | 70% | 70% |
| | Artificial graphite | 18% | 58% | 22% | 7% |
| | Styrene butadiene rubber | 7% | 4% | 3% | 18% |
| | Acetylene black | 3% | 2% | 3% | 3% |
| | Sodium carboxymethylcellulose | 2% | 1% | 2% | 2% |
| Carbon-based material active layer | Silicon oxide material | 0% | 35% | 0% | 0% |
| | Artificial graphite | 97% | 58% | 97% | 97% |
| | Styrene butadiene rubber | 1.50% | 4% | 1.5% | 1.5% |
| | Acetylene black | 0.80% | 2% | 0.8% | 0.8% |
| | Sodium carboxymethylcellulose | 0.70% | 1% | 0.7% | 0.7% |

### Test Example:

### 1. Maximum charge rate @ 10% capacity

A three-electrode battery was prepared, fully discharged to 2.5 V, and was charged to 10% of capacity at different rates of 0.4 C, 0.6 C, 0.8 C, 1 C and 1.2 C at normal temperature. Meanwhile, an anode potential in the process was monitored. Then the anode potential at the capacity of 10% at different rates was fitted to obtain the charging rate when the anode potential was under 0 V (defaulted as lithium plating potential), which was the acceptable maximum charging rate at capacity of 10%.

### 2. Cycle number @ 80% capacity retention

The battery was charged to 4.25 V at a constant current rate of 0.5 C at normal temperature, then charged to rate of 0.05 C at constant voltage of 4.25 V, and then discharged to 2.5 V at a constant current at rate of 1 C, which formed a cycle. The cycle test was repeated and was stopped until the discharge capacity was attenuated to be 80% of the initial capacity, thereby obtaining the number of cycles.

The test result is shown in following Table 4

**Table 4**

| | Maximum charge rate @ 10% capacity | Cycle number @ 80% capacity maintenance rate |
|---|---|---|
| Example 1 | 4.8 C | 1637 |
| Example 2 | 4.1 C | 1912 |
| Example 3 | 4.4 C | 1830 |
| Example 4 | 5.1 C | 1503 |
| Example 5 | 5.3 C | 1386 |
| Example 6 | 4.9 C | 1601 |
| Example 7 | 5.0 C | 1587 |
| Example 8 | 4.9 C | 1593 |
| Example 9 | 4.7 C | 1575 |
| Example 10 | 4.6 C | 1543 |
| Example 11 | 4.3 C | 1521 |
| Example 12 | 3.7 C | 1934 |
| Example 13 | 3.7 C | 1856 |
| Example 14 | 4.5 C | 1371 |
| Example 15 | 4.7 C | 1731 |
| Example 16 | 4.8 C | 1625 |
| Example 17 | 4.7 C | 1641 |
| Example 18 | 4.5 C | 1463 |
| Comparative Example 1 | 3.5 C | 1209 |
| Comparative Example 2 | 3.7 C | 873 |
| Comparative Example 3 | 3.4 C | 1366 |

In Examples 1-11 and Comparative Examples 1-3, the silicon-based material active layers were farther away from the current collectors than the carbon-based material active layers. Therefore, under the condition that the positions of the silicon-based materials were the same, the cycle performance and rate capability in Comparative Examples 1-11 were better than those in Examples 1-3. In Examples 12 and 13, the silicon-based material active layers were closer to the current collectors than the carbon-based material active layers. Although the silicon-based materials were on the inner sides of the active layer structures (namely closer to the current collectors), making the overall rate capability of the battery be equivalent to or only slightly be improved compared with that in Comparative Examples 1-3, but the cycle performance was obviously improved compared with the Comparative Examples 1-3.

Further, the comparison between Example 1 and Examples 12-13 showed that when the carbon-based material active layers were closer to the current collectors, higher rate capability could be obtained. When the silicon-based material active layers were closer to the current collectors, better cycle performance could be obtained. The comparison between Example 12 and Example 13 showed that when the silicon-based material active layers were closer to the current collectors, the base coating layers could be added to further improve the cycle performance.

It is to be noted that the present application is not limited to the above embodiments. The above embodiments are merely illustrative, and embodiments that have substantially the same composition as the technical concept and achieve equivalent effects within the scope of the technical solution of the present application are included in the technical scope of the present application. In addition, without departing from the essence of the present application, various modifications there are conceivable by those skilled in the art and other methods that are constructed by combining some of the constituent elements of the embodiments, shall also be encompassed within the scope of this application.

## Claims

1. A negative electrode sheet, comprising a current collector and a negative electrode active layer stacked on the surface of the current collector, wherein the negative electrode active layer comprises a first active layer and a second active layer which are stacked;
the materials of the first active layer comprise, in percentage by mass based on the first active layer:
60%-94% of a first silicon-based material, 0%-30% of a first carbon-based material, and 5%-15% of a first binder; and
the materials of the second active layer comprise, in percentage by mass based on the second active layer:
0%-5% of a second silicon-based material, 94%-99% of a second carbon-based material, and 1%-3% of a second binder.

2. The negative electrode sheet according to claim 1, wherein the first active layer is closer to the current collector than the second active layer.

3. The negative electrode sheet according to claim 2, wherein a base coating layer is also arranged between the first active layer and the current collector optionally, the materials of the base coating layer comprise a third binder and a third conductive agent;
further optionally, the third conductive agent comprises one or more of superconducting carbon, acetylene black, carbon black, Ketjen black, carbon dots, carbon nanotubes, graphene and carbon nanofibers; and
further optionally, the third binder comprises one or more of styrene butadiene rubber, polyacrylic acid, sodium polyacrylate, polyacrylamide, polyvinyl alcohol, sodium alginate, polymethylacrylic acid and carboxymethyl chitosan.

4. The negative electrode sheet according to any one of claims 1 to 3, wherein the materials of the first active layer further comprise 1%-5% of a first conductive agent; and optionally, the first conductive agent comprises one or more of superconducting carbon, acetylene black, carbon black, Ketjen black, carbon dots, carbon nanotubes, graphene and carbon nanofibers.

5. The negative electrode sheet according to any one of claims 1 to 4, wherein in the first active layer, the Dv50 of the first silicon-based material is ≤15 µm optionally, the Dv50 of the first silicon-based material is 5 µm to 10 µm;
in the first active layer, the Dv50 of the first carbon-based material is ≤10 µm optionally, the Dv50 of the first carbon-based material is 2 µm to 6 µm; and optionally, the Dv99 of the first carbon-based material is ≤15 µm.

6. The negative electrode sheet according to any one of claims 1 to 5, wherein the first binder comprises one or more of styrene butadiene rubber, polyacrylic acid, sodium polyacrylate, polyacrylamide, polyvinyl alcohol, sodium alginate, polymethylacrylic acid and carboxymethyl chitosan; and optionally, the first binder comprises one or more of styrene butadiene rubber, polyacrylic acid, sodium polyacrylate and polyacrylamide.

7. The negative electrode sheet according to any one of claims 1 to 6, wherein the materials of the second active layer further comprise 0.5%-2% of a first conductive agent; and optionally, the second conductive agent comprises one or more of superconducting carbon, acetylene black, carbon black, Ketjen black, carbon dots, carbon nanotubes, graphene and carbon nanofibers.

8. The negative electrode sheet according to any one of claims 1 to 7, wherein in the second active layer, the Dv50 of the second silicon-based material is ≤15 µm; and optionally, the Dv50 of the second silicon-based material is 5 µm to 10 µm.

9. The negative electrode sheet according to any one of claims 1 to 8, wherein in the second active layer, the Dv50 of the second carbon-based material is ≤25 µm; optionally, the Dv50 of the second carbon-based material is 5 µm to 20 µm; and optionally, the Dv99 of the second carbon-based material is ≤40 µm.

10. The negative electrode sheet according to any one of claims 1 to 9, wherein the second binder comprises one or more of styrene butadiene rubber, polyacrylic acid, sodium polyacrylate, polyacrylamide, polyvinyl alcohol, sodium alginate, polymethylacrylic acid and carboxymethyl chitosan; and optionally, the first binder comprises one or more of styrene butadiene rubber, polyacrylic acid, sodium polyacrylate and polyacrylamide.

11. The negative electrode sheet according to any one of claims 1 to 10, wherein the first silicon-based material and the second silicon-based material each independently comprise one or more of a pure silicon material, a silicon oxide material and a silicon-carbon material; and optionally, the first silicon-based material and the second silicon-based material each independently comprise one or more of the silicon-carbon material and the silicon oxide material.

12. The negative electrode sheet according to any one of claims 1 to 11, wherein the first carbon-based material and the second carbon-based material each independently comprise one or more of graphite, graphene, hard carbon, soft carbon, porous carbon and activated carbon; and optionally, the first carbon-based material and the second carbon-based material each independently comprise one or more of the graphite and hard carbon.

13. The negative electrode sheet according to any one of claims 1 to 12, wherein the compaction density of the negative electrode active layer is 1.2-2.0 g/cm³.

14. A secondary battery, comprising the negative electrode sheet according to any one of claims 1 to 13.

15. An electrical device, comprising the secondary battery according to claim 14.
